# EUROPÄISCHE PATENTSCHRIFT

(11) **EP 3 954 554 B1**
(45) Veröffentlichungstag und Bekanntmachung des Hinweises auf die Patenterteilung: **12.03.2025**
(21) Anmeldenummer: 21190778.7
(22) Anmeldetag: 11.08.2021
(51) Int. Cl.: B60D 1/01, B60D 1/62

(54) **KUPPLUNGSSYSTEM MIT KNICKWINKELMESSUNG**
CLUTCH SYSTEM WITH BEND ANGLE MEASUREMENT
SYSTÈME D'ACCOUPLEMENT À MESURE D'ANGLE DE PIVOTEMENT

(30) Priorität: 13.08.2020 DE 102020121315
(43) Veröffentlichungstag der Anmeldung: 16.02.2022
(73) Patentinhaber: SAF-HOLLAND GmbH, 63856 Bessenbach (DE)
(72) Erfinder: EISELEIN, Jörg-Ottmar, 78256 Steißlingen (DE); MÜLLER, Daniel, 63741 Aschaffenburg (DE)
(74) Vertreter: Müller Schupfner & Partner Patent- und Rechtsanwaltspartnerschaft mbB (Muc)

(56) Entgegenhaltungen:
- EP-A1- 2 415 620
- EP-A1- 2 815 950
- EP-A1- 2 899 101
- DE-A1- 102018 209 791
- FR-B1- 2 803 381

## Beschreibung

Die Erfindung betrifft ein Kupplungssystem, insbesondere ein Sattelkupplungssystem, mit Knickwinkelmessung.

Kupplungssysteme sind aus dem Stand der Technik grundlegend bekannt, diese dienen dazu, eine Zug- und/oder Bremskraft zwischen einem Zugfahrzeug und einem Anhänger zu übertragen. Ein Beispiel für ein solches Kupplungssystem sind die bekannten Sattelkupplungssysteme, welche einen Königszapfen auf dem Anhänger und eine Sattelkupplungsplatte auf dem Zugfahrzeug aufweisen. Um den Knickwinkel (Drehwinkel um die Hochachse) zwischen dem Zugfahrzeug und dem Anhänger zu bestimmen, ist es bekannt, eine berührenden Sensormethodik zu verwenden, welche durch einen Kontakt mit Kupplungskomponenten des Zugfahrzeugs und des Anhängers den Knickwinkel bestimmt. Diese Messanordnung führt jedoch meist zu einer Schwächung der mechanischen Komponenten des Kupplungssystems und ist dabei auch noch - durch das berührende Messen - vulnerable gegenüber mechanischen Beschädigungen, insbesondere beim Einkuppelvorgang, und darüber hinaus auch einem deutlichen Verschleiß unterlegen. Daher weisen diese bekannten Systeme ein nur geringes Maß an Betriebssicherheit auf.

Die EP 2 899 101 A1 betrifft einen Königszapfen zum Anbau an einem Sattelauflieger. Der offenbarte Königszapfen weist einen mit einer zugfahrzeugseitigen Sattelkupplung in Eingriff bringbaren Königszapfenkörper und eine Sensorvorrichtung zum Erfassen von Fahrzuständen des Sattelaufliegers auf. Die Sensorvorrichtung ist an einem Zapfenkörper angeordnet und zum Erfassen eines Fahrzustands des Sattelaufliegers ausgebildet.

Die EP 2 815 950 A1 betrifft ebenfalls eine Sattelkupplung zur einer Sattelzugmaschine mit einem Sattelanhänger. Dokument DE 10 2018 209791 A1 offenbart ein gattungsgemäßes Kupplungssystem mit zwei Sensoren zur Bestimmung des Winkels zwischen Zugfahrzeug und Anhänger.

Es ist daher Aufgabe der vorliegenden Erfindung, ein Kupplungssystem bereitzustellen, welches ein hohes Maß an Betriebssicherheit aufweist.

Diese Aufgabe wird mit einem Kupplungssystem gemäß Anspruch 1 und mit einem Nutzfahrzeuganhänger gemäß Anspruch 9 gelöst. Weitere vorteilhafte Merkmale und Weiterbildungen ergeben sich aus den abhängigen Ansprüchen, der Beschreibung sowie aus den Figuren.

Erfindungsgemäß umfasst ein Kupplungssystem, insbesondere Sattelkupplungssystem, eine erste Kupplungsanordnung, eine zweite Kupplungsanordnung, eine erste Messanordnung und eine zweite Messanordnung, wobei die erste Kupplungsanordnung an einem ersten Fahrzeug, insbesondere einem Anhänger, festgelegt ist oder festlegbar ist, wobei die erste Kupplungsanordnung ein Kraftübertragungselement, insbesondere einen Königszapfen, umfasst, welches sich in eine Königsrichtung erstreckt, wobei die zweite Kupplungsanordnung an einem zweiten Fahrzeug, insbesondere einem Zugfahrzeug, festgelegt ist oder festlegbar ist, wobei die zweite Kupplungsanordnung insbesondere eine Sattelkupplung umfasst, wobei die erste Kupplungsanordnung und die zweite Kupplungsanordnung derart ausgebildet sind, dass diese in einem eingekuppelten Zustand um die Königsrichtung relativ zueinander rotierbar sind, wobei die erste Messordnung relativ zu der ersten Kupplungsanordnung festgelegt ist, wobei die zweite Messanordnung relativ zu der zweiten Kupplungsanordnung festgelegt ist, wobei die erste Messanordnung derart ausgelegt ist, dass diese in dem eingekuppelten Zustand direkt berührungslos und/oder indirekt berührungslos den Drehwinkel der ersten Kupplungsanordnung um die Königsrichtung misst bzw. messen kann, wobei die zweite Messanordnung derart ausgelegt ist, dass diese in dem eingekuppelten Zustand direkt berührungslos und/oder indirekt berührungslos einen Drehwinkel der zweiten Kupplungsanordnung um die Königsrichtung misst und/oder messen kann.

Das erfindungsgemäße Kupplungssystem dient dazu, Kupplungskräfte, insbesondere senkrecht zur Königsrichtung, zwischen einem ersten Fahrzeug, insbesondere einem Anhänger, und einem zweiten Fahrzeug, insbesondere einem Zugfahrzeug zu übertragen. Dieses Kupplungssystem kann insbesondere ein Sattelkupplungssystem sein. Ein Sattelkupplungssystem ist dabei insbesondere durch das Vorhandensein einer Sattelkupplung und eines entsprechenden Königszapfens gekennzeichnet. Das erfindungsgemäße Kupplungssystem verfügt zur Kraftübertragung über eine erste Kupplungsanordnung und über eine zweite Kupplungsanordnung. Die erste Kupplungsanordnung dient dabei dazu, an einem ersten Fahrzeug, z.B. einem Anhänger, insbesondere einem Sattelauflieger, festgelegt zu sein. Um Kräfte zwischen dieser ersten Kupplungsanordnung auf die zweite Kupplungsanordnung in einem eingekuppelten Zustand zu übertragen, verfügt die erste Kupplungsanordnung über ein Kraftübertragungselement, welches insbesondere ein Königszapfen oder ein Kupplungsbolzen oder -riegel sein kann. Dieses Kraftübertragungselement erstreckt sich dabei in die Königsrichtung. In anderen Worten kann daher die Längsachse bzw. die Längsrichtung des Kraftübertragungselements die Königsrichtung sein. Vorteilhafterweise ist diese Königsrichtung in einem eingekuppelten idealisierten Zustand parallel zu einer vertikalen Achse bzw. zum Vektor der Erdbeschleunigung gerichtet. Die zweite Kupplungsanordnung hingegen dient dazu, an einem zweiten Fahrzeug, insbesondere einem Zugfahrzeug, wie beispielsweise einem Sattelschlepper, festgelegt zu sein. Die zweite Kupplungsanordnung verfügt insbesondere über Kraftübertragungsstrukturen, insbesondere in Form einer Sattelkupplung, um Kupplungskräfte zwischen der ersten Kupplungsanordnung und der zweiten Kupplungsanordnung übertragen zu können, insbesondere im eingekuppelten Zustand. Diese Kraftübertragungsstrukturen dienen daher in anderen Worten dazu, derart mit dem Kraftübertragungselement der ersten Kupplungsanordnung in einem eingekuppelten Zustand zusammenwirken zu können, sodass Zugkräfte und/oder Bremskräfte zwischen der ersten Kupplungsanordnung und der zweiten Kupplungsanordnung in dem eingekuppelten Zustand übertragen werden können. Der eingekuppelte Zustand ist dabei insbesondere derjenige Zustand, bei welchem insbesondere formschlüssig eine Separation der ersten Kupplungsanordnungen zu der zweiten Kupplungsanordnung verhindert ist. In anderen Worten kann der eingekuppelte Zustand derjenige Zustand sein, bei welchem das erste Fahrzeug fest mit dem zweiten Fahrzeug verkuppelt ist. Das erfindungsgemäße Kupplungssystem verfügt über eine erste Messanordnung und eine zweite Messanordnung. Die erste Messanordnung ist dabei relativ zu der ersten Kupplungsanordnung festgelegt und die zweite Messanordnung relativ zu der zweiten Kupplungsanordnung festgelegt. Unter einem "relativen festgelegt" kann dabei in diesem Zusammenhang verstanden werden, dass die erste Messordnung relativ zu der ersten Kupplungsanordnung ortsfest festgelegt ist und die zweite Messanordnung entsprechend relativ zu der zweiten Kupplungsanordnung ortsfest festgelegt ist. In anderen Worten kann dies bedeuten, dass die erste Messanordnung und/oder die zweite Messanordnung jeweils relativ zu der ersten Kupplungsanordnung bzw. zu der zweiten Kupplungsanordnung ortsfest angeordnet und unverschieblich und/oder unverdrehbar sind. Dies kann beispielsweise dadurch erreicht werden, dass die erste Messanordnung an der ersten Kupplungsanordnung und/oder die zweite Messanordnung an der zweiten Kupplungsanordnung stoff-, kraft- und/oder formschlüssig festgelegt sind. Die erste und die zweite Messanordnung sind dabei derart ausgelegt, dass diese in dem eingekuppelten Zustand direkt berührungslos und/oder indirekt berührungslos jeweils einen Drehwinkel der ersten Kupplungsanordnung bzw. der zweiten Kupplungsanordnung um die Königsrichtung messen bzw. messen können. Daher ist die erste bzw. die zweite Messanordnung insbesondere derart ausgebildet, dass diese einen Rotationswinkel um die Königsrichtung in einem globalen Koordinatensystem misst bzw. messen kann. Unter einem direkten berührungslosen Messen ist dabei zu verstehen, dass die erste Messanordnung über eine Messmethodik, insbesondere zumindest über einen Sensor, verfügt, welcher berührungslos unmittelbar den Drehwinkel in einem globalen Koordinatensystem bestimmen bzw. messen kann. Unter einem indirekten berührungslosen Messen hingegen ist zu verstehen, dass die erste Messanordnung derart ausgebildet ist, dass diese berührungslos einen Messwert erfassen kann, welcher nicht direkt den Drehwinkel angibt, sondern lediglich indirekt den Drehwinkel beinhaltet, wie dies beispielsweise bei einer Messung der Drehrate oder der Drehbeschleunigung um die Königsrichtung der Fall ist. Die obig getätigten Ausführungen in Relation zur ersten Messanordnung in Verbindung mit der ersten Kupplungsanordnung gelten in gleicher Weise für die zweite Messanordnung in Verbindung mit der zweiten Kupplungsanordnung.

Erfindungsgemäß umfasst das Kupplungssystem eine Auswerteinheit, wobei die Auswerteinheit dazu ausgelegt ist, eine Differenz aus den Messwerten der ersten Messanordnung und der zweiten Messanordnung zu bilden. In anderen Worten kann das Kupplungssystem über eine Auswerteinheit verfügen, welche dazu ausgelegt sein kann, Messwerte der ersten Messanordnung von Messwerten der zweiten Messanordnung zu subtrahieren und/oder umgekehrt. Durch diese Differenzbildung kann in einfacher Weise aus den globalen Drehwinkeln der relative Drehwinkel zwischen dem ersten Fahrzeug und dem zweiten Fahrzeug um die Königsrichtung bestimmt werden. In anderen Worten kann durch diese Differenzbildung in einfacher Weise der global bestimmte Drehwinkel des ersten Fahrzeugs und des zweiten Fahrzeugs in einfacher Weise in einen relativen Drehwinkel zwischen dem ersten Fahrzeug und dem zweiten Fahrzeug umgerechnet werden.

Zweckmäßigerweise weist die erste Messanordnung und/oder die zweite Messanordnung eine Vielzahl von Sensoren auf, wobei zumindest einer dieser Sensoren direkt oder indirekt einen Drehwinkel um die Königsrichtung misst bzw. messen kann. In anderen Worten kann die erste Messanordnung und/oder kann die zweite Messanordnung eine Vielzahl von weiteren Sensoren aufweisen, wobei zumindest einer der Sensoren der ersten und/oder der zweiten Messanordnung in der Lage ist, direkt oder indirekt berührungslos einen Drehwinkel um die Königsrichtung zu messen bzw. messen zu können. Die weiteren Sensoren können dabei beispielsweise Gyrometer und/oder GNSS-Einheiten, vorteilhafterweise eine GPS-Einheit, oder Beschleunigungssensoren sein. Durch das Vorhandensein weiterer, insbesondere berührungsloser, Sensoren kann die Positionierung und/oder die, insbesondere relative und/oder absolute (globale), Ausrichtung des ersten und/oder des zweiten Fahrzeugs noch genauer bestimmt werden. Darüber hinaus können diese weiteren Sensoren auch noch dazu genutzt werden, eine gewisse Redundanz zu schaffen. Es ist dabei zweckmäßig, wenn die erste Messanordnung und/oder die zweite Messanordnung zumindest jeweils über zwei Sensoren verfügen, welche direkt oder indirekt den Drehwinkel um die Königsrichtung messen bzw. messen können, um ein besonders hohes Maß an Redundanz für die Bestimmung des Drehwinkels zu erreichen.

Zweckmäßigerweise umfasst die erste Messanordnung und/oder die zweite Messanordnung einen Drehratensensor, insbesondere einen Gyrometer. Durch die Verwendung eines Drehratensensors kann in besonders einfacher Weise indirekt und berührungslos - durch Integration der Drehrate - der Drehwinkel um die Königsrichtung gemessen bzw. bestimmt werden. Der Drehratensensor kann dabei insbesondere ein Gyrometer sein, denn diese Art von Sensor ist besonders robust und zuverlässig bei der Bestimmung einer Drehrate um eine Achse, sodass durch den Einsatz eines Gyrometers die Betriebssicherheit und die Zuverlässigkeit des Systems weiter gesteigert werden kann.

In einer vorteilhaften Ausführungsform weist das Kupplungssystem, insbesondere die Auswerteinheit und/oder die erste Messanordnung und/oder die zweite Messanordnung, eine Integrationseinheit auf, wobei die Integrationseinheit dazu ausgelegt ist, ein oder eine Vielzahl von Messwerten, insbesondere die Drehrate und/oder die Drehbeschleunig, über die Zeit, insbesondere numerisch, zu integrieren. Durch die Verwendung einer Integrationseinheit kann in besonders einfacher Weise durch die Messung der ersten oder der zweiten zeitlichen Ableitung des Drehwinkels indirekt der Drehwinkel bestimmt bzw. gemessen werden. Die Integrationseinheit kann dabei entweder durch eine numerische Integration und/oder durch eine physikalische Integration, beispielsweise über Kapazitäten, den ermittelten Messwert integrieren. Vorteilhafterweise kann diese numerische Integration dabei sowohl im physikalischen Raum und/oder im Fourierraum erfolgen. In anderen Worten kann die Integrationseinheit derart ausgebildet sein, dass diese eine numerische Integration der ermittelten Messwerte im physikalischen Raum und/oder im Fourierraum durchführt. Bei einer numerischen Integration im physikalischen Raum kann der Vorteil erzielt werden, dass eine besonders einfache Implementierung eines derartigen Integrationsverfahren erfolgen kann, sodass eine besonders kostengünstige Integrationseinheit resultiert. Bei der Verwendung einer Integration im Fourierraum kann die periodische Bewegung des ersten Fahrzeugs relativ zum zweiten Fahrzeug ausgenutzt werden. Die Integration im Fourierraum weist dabei die Vorteile auf, dass eine derartige Integration besonders schnell erfolgen kann und darüber hinaus auch nur geringe numerische Integrationsfehler aufweist. Vorteilhafterweise erfolgt dabei diese Integration jedoch nicht auf den Messwerten selbst, sondern vielmehr erfolgt die Integration lediglich auf der Differenz des Messwertes der ersten Messanordnung zu der zweiten Messanordnung. Hierdurch kann insbesondere eine Integrationsoperation eingespart werden, sodass eine kostengünstige Einheit resultiert. Vorteilhafterweise ist die Integrationseinheit ein Bestandteil der Auswerteinheit. Hierdurch kann wertvoller Bauraum gespart werden und auch der Montageaufwand kann hierdurch reduziert werden.

Zweckmäßigerweise ist die erste Messanordnung relativ zu der ersten Kupplungsanordnung derart festgelegt, dass zumindest ein Sensor der ersten Messanordnung in dem eingekuppelten Zustand auf der Königsrichtung liegt und/oder, wobei die zweite Messanordnung relativ zu der zweiten Kupplungsanordnung derart festgelegt ist, dass zumindest ein Sensor der zweiten Messanordnung in dem eingekuppelten Zustand auf der Königsrichtung liegt. Durch das Anordnen eines Sensors der ersten Messanordnung und/oder der zweiten Messanordnung auf der Königsrichtung kann eine besonders genaue direkte und/oder indirekte Messung des Drehwinkels um die Königsrichtung erfolgen, denn abstandsbedingte Messfehler können durch diese Anordnung reduziert werden. Unter einem "Liegen des Sensors auf der Königsrichtung" ist dabei zu verstehen, dass der Sensor bzw. das Gehäuse des Sensors durch die Königsrichtung geschnitten wird, wenn sich die erste Kupplungsanordnung und die zweite Kupplungsanordnung in dem eingekuppelten Zustand befinden. Beispielsweise kann daher ein Sensor der ersten Messanordnung in Königsrichtung oberhalb eines möglichen Königszapfens angeordnet sein. Des weiteren kann beispielsweise in der zweiten Kupplungsanordnung ein Sensor der zweiten Messanordnung derart positioniert sein, dass sich dieser in Königsrichtung gesehen unterhalb des Königszapfens befindet, wenn die erste Kupplungsanordnung und die zweite Kupplungsanordnung sich in dem eingekuppelten Zustand befinden. Vorteilhafterweise ist dabei derjenige Sensor der ersten Messanordnung und/oder der zweiten Messanordnung, welcher jeweils auf der Königsrichtung liegt, derjenige Sensor, welcher Berührungslos direkt und/oder indirekt den Drehwinkel der ersten Kupplungsanordnung und/oder der zweiten Kupplungsanordnung um die Königsrichtung misst bzw. messen kann.

Zweckmäßigerweise weist die erste Messanordnung und/oder die zweite Messanordnung einen Beschleunigungssensor auf, wobei der Beschleunigungssensor insbesondere die Beschleunigung in drei senkrecht zueinander stehenden Raumrichtungen misst oder messen kann. Durch die Verwendung eines Beschleunigungssensors kann in indirekter Weise die Position und/oder die Geschwindigkeit des Kupplungssystems bestimmt werden. Vorteilhafterweise kann hierfür ebenfalls auf die bereits dargelegte Integrationseinheit zurückgegriffen werden, sodass diese nicht nur den Drehwinkel sondern auch die translatorische Position durch Integration und/oder die translatorische Geschwindigkeit durch Integration bestimmen kann. Durch das Verwenden eines Beschleunigungssensors ist es daher möglich, nicht nur die relative Verdrehausrichtung des ersten Fahrzeugs zum zweiten Fahrzeug um die Königsrichtung zu bestimmen, sondern vielmehr kann hierdurch auch noch die relative translatorische Lage der beiden Fahrzeuge zueinander bestimmt werden. Wie bereits dargelegt ist dieser Beschleunigungssensor zweckmäßigerweise derart ausgelegt, dass dieser gleichzeitig die Beschleunigung in drei senkrecht zueinander stehenden Raumrichtungen messen kann. Alternativ oder zusätzlich bevorzugt kann die erste Messanordnung und/oder die zweite Messanordnung auch drei verschiedene Beschleunigungssensoren aufweisen, welche jeweils in die drei senkrecht zueinander stehenden Raumrichtungen die jeweilige Beschleunigung bestimmen und/oder messen. Durch das gleichzeitige oder zeitnahe (im Rahmen der Abtastrate) Bestimmen der Beschleunigung in drei verschiedene Raumrichtungen resultiert ein Messsystem, dass eine Positionsbestimmung im Raum ermöglicht.

Vorteilhafterweise weist die erste Messanordnung und/oder die zweite Messanordnung ein Magnetometer auf. Ein Magnetometer ist dabei insbesondere ein Sensor, welcher die winkelige Ausrichtung eines Objekts unter Zuhilfenahme des Erdmagnetfelds bestimmen kann. Durch die Verwendung eines Magnetometers kann in besonders einfacher Weise ein globaler Drehwinkel des ersten und/oder des zweiten Fahrzeugs um die Königsrichtung bestimmt werden. Zusätzlich bevorzugt kann dieses Magnetometer auch noch dazu genutzt werden, gemessene Drehwinkel zu korrigieren, insbesondere diejenigen die durch Integration bestimmt wurden. Diese Korrektur kann beispielsweise dazu genutzt werden, die Drift eines durch Integration bestimmten Messwertes zu eliminieren. Daher wird durch die Verwendung des Magnetometers die Zuverlässigkeit der Messung des Drehwinkels um die Königsrichtung gesteigert.

Vorteilhafterweise weist die erste Messanordnung eine erste Kommunikationseinheit und/oder ist die erste Messanordnung mit einer ersten Kommunikationseinheit verbunden, wobei die erste Kommunikationseinheit insbesondere derart ausgelegt ist, dass diese die Messwerte der ersten Messanordnung drahtlos überträgt. In anderen Worten kann die erste Messanordnung selbst eine erste Kommunikationseinheit aufweisen oder mit einer solchen verbunden sein, wobei die erste Kommunikationseinheit dazu dient, mit der Auswerteinheit und/oder mit einer zweiten Kommunikationseinheit der zweiten Messanordnung verbunden zu sein, um so die erfassten Messwerte der ersten Messanordnung zu übertragen. Vorteilhafterweise erfolgt dabei diese Übertragung drahtlos, insbesondere durch WLAN oder Bluetooth, sodass insbesondere bei einem Verkuppeln des ersten Fahrzeugs mit dem zweiten Fahrzeug keinerlei drahtgebundene Kommunikationsmittel händisch oder automatisch verbunden werden müssen, um die Messwerte zu übertragen. Daher kann durch eine drahtlose Übertragungsmöglichkeit der ersten Kommunikationseinheit die Bedienbarkeit der Kupplungsanordnung deutlich gesteigert werden.

Zweckmäßigerweise weist die zweite Messanordnung eine zweite Kommunikationseinheit auf und/oder ist mit einer zweiten Kommunikationseinheit verbunden, wobei die zweite Kommunikationseinheit insbesondere derart ausgelegt ist, dass diese die Messwerte der zweiten Messanordnung drahtlos überträgt. In anderen Worten kann daher nicht nur die erste Messanordnung über eine erste Kommunikationseinheit verfügen sondern auch und/oder alternativ kann auch die zweite Messanordnung eine Kommunikationseinheit aufweisen. Durch das Verwenden einer zweiten Kommunikationseinheit, welche zumindest mit der zweiten Messanordnung verbunden ist und/oder welche Teil der zweiten Messanordnung sein kann, können dabei prinzipiell dieselben Vorteile erreicht werden, wie bei einer ersten Kommunikationseinheit in Verbindung mit der ersten Messanordnung.

Vorteilhafterweise umfasst die erste Messanordnung und/oder die zweite Messanordnung eine inertiale Messeinheit und/oder ist die erste Messanordnung und/oder die zweite Messanordnung eine inertiale Messeinheit. Eine inertiale Messeinheit ist eine räumliche Kombination mehrerer Inertialsensoren wie Beschleunigungssensoren und/oder Drehratensensoren. In anderen Worten ist eine inertiale Messeinheit derart ausgebildet, dass diese innerhalb eines Gehäuses mehrere Beschleunigungssensoren und mehrere Drehratensensoren aufweisen kann. Insbesondere ist die inertiale Messeinheit dabei derart ausgebildet, dass diese die Beschleunigung und die Drehrate in bzw. um drei senkrecht zueinander stehende Raumrichtungen messen kann. Vorteilhafterweise ist dabei zumindest eine dieser drei Raumrichtungen parallel zu der Königsrichtung ausgebildet, wenn sich das Kupplungssystem in dem eingekuppelten Zustand befindet. Durch das Ausbilden und/oder das Verwenden einer inertialen Messeinheit in der ersten Messanordnung und/oder in der zweiten Messanordnung kann in besonders bauraumsparender Weise eine Art Trägheitsnavigationssystem für das erste und/oder für das zweite Fahrzeug realisiert werden. Daher ist es durch die Verwendung dieser inertialen Messeinheit möglich, in bauraumsparender Weise, eine besonders umfängliche Bestimmung der Ausrichtung und der Position des ersten Fahrzeugs und/oder des zweiten Fahrzeugs zu bestimmen. Insbesondere ermöglicht ein solches System daher auch bei Tunnelfahrten eine exakte Bestimmung der Ausrichtung und der Position des ersten und/oder des zweiten Fahrzeugs.

Vorteilhafterweise umfasst die erste Messanordnung eine GNSS-Einheit und/oder umfasst die zweite Messanordnungen eine GNSS-Einheit. Hierdurch ist es möglich, in besonders einfacher Weise eine besonders genaue Positionsbestimmung des ersten Fahrzeugs und/oder des zweiten Fahrzeugs durchzuführen. Vorteilhafterweise weißt die erste Messanordnung jedoch zusätzlich zumindest die Möglichkeit auf, die Position auch durch andere Sensoren, insbesondere Beschleunigungssensoren, zu bestimmen. Dies ist besonders deshalb vorteilhaft, da GNSS-Einheiten häufig in gewissen Situationen keine zuverlässige Positionsbestimmung ermöglichen können, wie beispielsweise bei einer Tunnelfahrt. Daher kann durch die Verwendung verschiedener Positionsbestimmungsmöglichkeiten der auftretende Messfehler eliminiert oder zumindest reduziert werden und darüber hinaus kann auch bei einem Ausfall und/oder Störung eines der Systeme weiterhin zuverlässig die Position des ersten und/oder des zweiten Fahrzeugs bestimmt werden. Eine GNSS-Einheit (Globales Navigationssatellitensystem) kann insbesondere eine GPS oder eine Galileo Einheit sein.

In einer vorteilhaften Ausführungsform weist die erste Messanordnung eine Vielzahl von GNSS-Einheiten, insbesondere zwei, auf und/oder oder weist die zweite Messanordnung eine Vielzahl von GNSS-Einheiten, insbesondere zwei, auf. Durch das Verwenden von mehreren GNSS-Einheiten in der ersten und/oder in der weiten Messanordnung kann insbesondere durch die relative Positionierung der GNSS-Einheit nicht nur die Position des ersten und/oder des zweiten Fahrzeugs bestimmt werden, sondern darüber hinaus kann hierdurch auch noch Rückschluss auf die winkelige Anordnung, insbesondere den Drehwinkel um die Königsrichtung, gezogen werden bzw. dieser bestimmt werden.

Ein weiterer Aspekt der Erfindung betrifft einen Nutzfahrzeuganhänger. Ein derartiger Nutzfahrzeuganhänger umfasst eine erste Kupplungsanordnung und eine erste Messanordnung, wobei der Nutzfahrzeuganhänger sich in eine Längsrichtung erstreckt, wobei die erste Kupplungsanordnung ein Kraftübertragungselement, insbesondere einen Königszapfen, umfasst, welches sich in eine Königsrichtung erstreckt, wobei die erste Kupplungsanordnung derart ausgebildet ist, das diese in einem eingekuppelten Zustand um die Königsrichtung relativ zu einer zweiten Kupplungsanordnung rotierbar ist, wobei die erste Messanordnung relativ zu der ersten Kupplungsanordnung festgelegt ist, wobei die erste Messanordnung derart ausgelegt ist, dass diese in dem eingekuppelten zustand direkt und/oder indirekt berührungslos einen Drehwinkel der ersten Kupplungsanordnung um die Königsrichtung misst bzw. messen kann. In anderen Worten kann daher die Erfindung nicht nur ein Kupplungssystem umfassen sondern auch sich lediglich auf einen Nutzfahrzeuganhänger beziehen, welcher insbesondere die obig dargelegten Vorteile und Ausbildungen in Hinblick auf das erste Fahrzeug bzw. die erste Kupplungsanordnung und die erste Messanordnung aufweist. In anderen Worten können die obig dargelegten Vorteile, Merkmale und Ausgestaltungen in Hinblick auf das erste Fahrzeug, die erste Messanordnung und die erste Kupplungsanordnung in einen Nutzfahrzeuganhänger realisiert sein. Ein Nutzfahrzeuganhänger im Sinne der Erfindung ist insbesondere ein straßentauglicher Anhänger und/oder ein Anhänger mit einem zulässigen Gesamtgewicht von mehr als 3,5 Tonnen, bevorzugt von mehr als 7,5 Tonnen und besonders bevorzugt von mehr als 15 Tonnen.

In einer erfindungsgemäßen Weiterbildung des Nutzfahrzeuganhängers weist die erste Messanordnung eine GNSS-Einheit auf, wobei die erste Messanordnung einen Drehratensensor aufweist, wobei der Drehratensensor eine Drehrate um die Königsrichtung misst bzw. messen kann, wobei der Drehratensensor und die erste Kupplungsanordnung im Bereich eines ersten distalen Endes des Nutzfahrzeuganhängers in Längsrichtung angeordnet sind, wobei die GNSS-Einheit im Bereich des gegenüberliegenden distalen Endes in Längsrichtung des Nutzfahrzeuganhängers angeordnet ist. In anderen Worten weißt die erste Messanordnung zumindestens einen Drehratensensor auf, welcher die Drehrate um die Königsrichtung messen kann und darüber hinaus verfügt die erste Messanordnung auch noch über eine GNSS-Einheit. Die GNSS-Einheit ist dabei in einen gegenüberliegenden distalen Endbereich des Nutzfahrzeuganhängers in Vergleich zum Drehratensensor angeordnet. In anderen Worten kann dies bedeuten, dass insbesondere der Drehratensensor in einem frontalen distalen Endbereich und die GNSS-Einheit in einem distalen Endbereich des Nutzfahrzeuganhängers angeordnet sind. Ein distaler Endbereich des Nutzfahrzeuganhängers kann dabei insbesondere derjenige Endabschnitt des Anhängers sein, welcher sich über 20 Prozent, bevorzugt 10 Prozent der Länge des Anhängers erstreckt. Alternativ oder zusätzlich bevorzugt sind die distalen Endbereiche die Bereiche in Längsrichtung des Nutzfahrzeuganhängers, welche in Längsrichtung gesehen maximal zwei Meter vom absoluten distalen Ende des Anhängers entfernt sind. Die Längsrichtung des Nutzfahrzeuganhängers ist dabei insbesondere diejenige Richtung in welcher der Anhänger seine größte Hauptabmessung aufweist. In anderen Worten ist daher die Längsrichtung insbesondere diejenige Richtung, in welche sich die Länge des Nutzfahrzeuganhängers bestimmt. Alternativ oder zusätzlich bevorzugt kann die Längsrichtung auch diejenige Richtung sein, in welche sicher der Nutzfahrzeuganhänger bei einer "Geradeausfahrt" bewegt.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungen eingesetzt werden, sofern dies nicht ausdrücklich ausgeschlossen wurde. Es zeigen:
- Figur 1: ein Kupplungssystem;
- Figur 2: ein Fahrzeugsystem mit einem Kupplungssystem;
- Figur 3: einen Schnitt durch ein Kupplungssystem;
- Figur 4: eine perspektivische Ansicht eines Kupplungssystems.

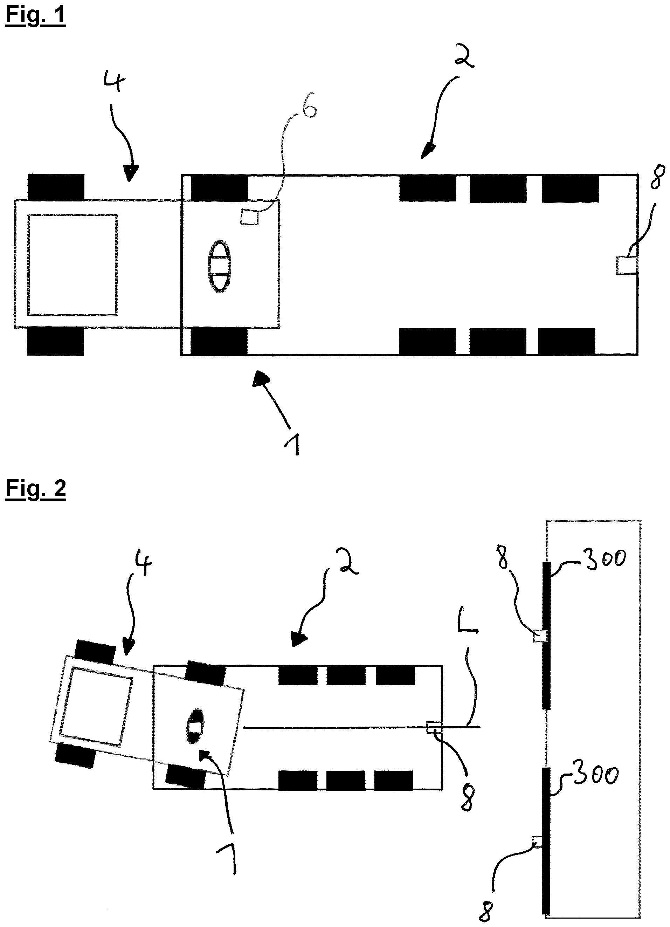

In der **Figur 1** ist eine schematische Ansicht eines Nutzfahrzeugsystems mit einem Kupplungssystem 1 gezeigt. Dieses Nutzfahrzeugsystem verfügt über ein erstes Fahrzeug 2 in Form eines Sattelaufliegers. Das zweite Fahrzeug 4 ist in der dargestellten Ausführungsform als ein Sattelschlepper ausgebildet. Auf dem Sattelschlepper befindet sich die Auswerteinheit 6. Alternativ kann eine derartige Auswerteinheit 6 auch am ersten Fahrzeug 2 angeordnet sein. In einem distalen Endbereich des ersten Fahrzeugs in Längsrichtung Lbefindet sich eine GNSS-Einheit 8.

In der **Figur 2** ist eine schematische Ansicht eines Nutzfahrzeugsystems mit einem Kupplungssystem 1 gezeigt. Das Nutzfahrzeugsystem verfügt über ein erstes Fahrzeug 2 und ein zweites Fahrzeug 4. Das erste Fahrzeug 2 ist dabei in der dargestellten Ausführungsform ein Nutzfahrzeuganhänger. Dieser Nutzfahrzeuganhänger erstreckt sich dabei in Längsrichtung L. An einem der ersten Kupplungsanordnungen 10 gegenüberliegenden distalen Endes in Längsrichtung L ist am Nutzfahrzeuganhänger eine GNSS-Einheit 8 angeordnet. In der dargestellten Ausführungsform ist das Nutzfahrzeugsystem kurz davor an einem der Ladedocks 300 anzudocken, wobei jedes dieser Ladedocks 300 ebenfalls über eine GNSS-Einheit 8 aufweist.

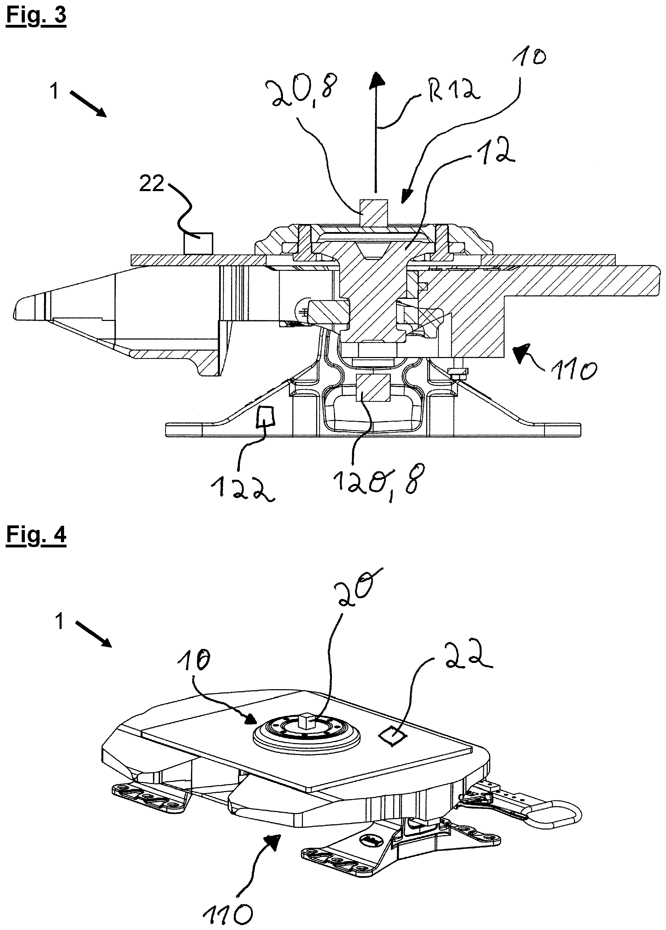

In der **Figur 3** ist ein Schnitt durch zumindest einen Teil eines Kupplungssystems 1 gezeigt. Das Kupplungssystem 1 verfügt über eine erste Kupplungsanordnung 10, welche eine erste Messanordnung 20 aufweist, die zumindest über eine GNSS-Einheit 8 verfügt. Darüber hinaus verfügt die erste Messanordnung 20 auch noch über eine inertiale Messeinheit. Die gesamte Messanordnung 20 ist dabei in dem dargestellten Ausführungsbeispiel innerhalb eines Gehäuses angeordnet. Die erste Messanordnung 20 ist dabei - in dem dargestellten eingekuppelten Zustand - auf der Königsrichtung R 12 liegend angeordnet. Wie der **Figur 3** entnehmbar, schneidet daher die Königsrichtung R 12 die erste Messanordnung 20. Die erste Kupplungsanordnung 10 verfügt auch über ein Kraftübertragungselement 12, welches sich in die Königsrichtung R 12 erstreckt. Das erste Kraftübertragungselement 12 ist dabei in der dargestellten Ausführungsform ein Königszapfen. Die zweite Kupplungsanordnung 110 ist in der dargestellten Ausführungsform eine Sattelkupplung. Die zweite Kupplungsanordnung 110 verfügt über eine zweite Messanordnung 120, welche ebenfalls im eingekuppelten Zustand auf der Königsrichtung R 12 liegt. Die zweite Messanordnung 120 verfügt ebenfalls über eine GNSS-Einheit 8 und eine inertiale Messeinheit. Um die von der ersten Messanordnung 20 erfassten Messwerte und die von der zweiten Messanordnung 120 erfassten Messwerte weiterzuleiten, verfügt die erste Kupplungsanordnung 10 über eine erste Kommunikationseinheit 22 und die zweite Kupplungsanordnung 110 über eine zweite Kommunikationseinheit 122.

In der **Figur 4** ist eine beispielhafte perspektivische Ansicht eines erfindungsgemäßen Kupplungssystems 1 gezeigt. Prinzipiell kann dabei die in Figur 4 dargestellte perspektivische Ansicht zu der in der Figur 3 dargestellten Schnittansicht passen. Darüber hinaus kann die in der Figur 4 dargestellte Ausgestaltung des Kupplungssystems 1 auch in Nutzfahrzeugsystemen eingesetzt werden, welche in den Figuren 1 oder 2 dargestellten sind. Wie der Figur 4 entnehmbar ist, verfügt die erste Kupplungsanordnung 10 über eine erste Messanordnung 20, welche unmittelbar oberhalb eines Königszapfens angeordnet ist. Darüber hinaus verfügt die in der Figur 4 dargestellte erste Messanordnung 20 auch noch über eine erste Kommunikationseinheit 22, welche dazu ausgelegt ist, drahtlos den und/oder die erfassten Messwert(e) der ersten Messanordnung 20 zu übertragen und/oder drahtlos andere Messwerte zu empfangen, insbesondere durch den Einsatz einer zweiten Kommunikationseinheit einer zweiten Messanordnung, welche zur zweiten Kupplungsanordnung 110 gehörig sein kann.

### Bezugszeichenliste:

- 1: - Kupplungssystem
- 2: - erstes Fahrzeug
- 4: - zweites Fahrzeug
- 6: - Auswerteinheit
- 8: - GNSS-Einheit
- 10: - erste Kupplungsanordnung
- 12: - Kraftübertragungselement
- 20: - erste Messanordnung
- 22: - erste Kommunikationseinheit
- 110: - zweite Kupplungsanordnung
- 120: - zweite Messanordnung
- 122: - zweite Kommunikationseinheit
- 300: - Ladedock
- L: - Längsrichtung
- R12: - Königsrichtung

## Patentansprüche

1. Kupplungssystem (1), insbesondere Sattelkupplungssystem, umfassend
eine erste Kupplungsanordnung (10), eine zweite Kupplungsanordnung (110),
eine erste Messanordnung (20) und
eine zweite Messanordnung (120),
wobei die erste Kupplungsanordnung (10) an einem ersten Fahrzeug (2), insbesondere einem Anhänger, festgelegt ist oder festlegbar ist,
wobei die erste Kupplungsanordnung (10) ein Kraftübertragungselement (12), insbesondere einen Königszapfen, umfasst, welches sich in eine Königsrichtung (R12) erstreckt,
wobei die zweite Kupplungsanordnung (110) an einem zweiten Fahrzeug (4), insbesondere einem Zugfahrzeug, festgelegt ist oder festlegbar ist,
wobei die zweite Kupplungsanordnung (110) insbesondere eine Sattelkupplung umfasst,
wobei die erste Kupplungsanordnung (10) und die zweite Kupplungsanordnung derart ausgebildet sind, dass diese in einem eingekuppelten Zustand um die Königsrichtung (R12) relativ zu einander rotierbar sind,
wobei die erste Messanordnung (20) relativ zu der ersten Kupplungsanordnung (10) festgelegt ist,
wobei die zweite Messanordnung (120) relativ zu der zweiten Kupplungsanordnung (110) festgelegt ist,
wobei die erste Messanordnung (20) derart ausgelegt ist, dass diese in dem eingekuppelten Zustand direkt berührungslos und/oder indirekt berührungslos einen Drehwinkel der ersten Kupplungsanordnung (10) um die Königsrichtung (R12) misst bzw. messen kann,
wobei die zweite Messanordnung (120) derart ausgelegt ist, dass diese in dem eingekuppelten Zustand direkt berührungslos und/oder indirekt berührungslos einen Drehwinkel der zweiten Kupplungsanordnung (110) um die Königsrichtung (R12) misst bzw. messen kann,
wobei das Kupplungssystem (1) eine Auswerteinheit (6) umfasst,
wobei die Auswerteinheit (6) dazu ausgelegt ist, eine Differenz aus den Messwerten der ersten Messanordnung (20) und der zweiten Messanordnung (120) zu bilden,
**dadurch gekennzeichnet dass**
die erste Messanordnung (20) relativ zu der ersten Kupplungsanordnung (10) derart festgelegt ist,
dass zumindest ein Sensor der ersten Messanordnung (20) in dem eingekuppelten Zustand auf der Königsrichtung (R12) liegt und/oder
dass die zweite Messanordnung (120) relativ zu der zweiten Kupplungsanordnung (110) derart festgelegt ist,
dass zumindest ein Sensor der zweiten Messanordnung (120) in dem eingekuppelten Zustand auf der Königsrichtung (R12) liegt.

2. Kupplungssystem (1) gemäß einem der vorhergehenden Ansprüche,
wobei die erste Messanordnung (20) und/oder die zweite Messanordnung (120) eine Vielzahl von Sensoren aufweist bzw. aufweisen,
wobei zumindest einer dieser Sensoren direkt oder indirekt einen Drehwinkel um die Königsrichtung misst bzw. messen kann.

3. Kupplungssystem (1) gemäß einem der vorhergehenden Ansprüche,
wobei die erste Messanordnung (20) und/oder die zweite Messanordnung (120) ein Drehratensensor, insbesondere ein Gyrometer, umfasst.

4. Kupplungssystem (1) gemäß einem der vorhergehenden Ansprüche, insbesondere nach Anspruch 3,
wobei das Kupplungssystem (1), insbesondere die Auswerteinheit (6) und/oder die erste Messanordnung (20) und/oder die zweite Messanordnung (120), eine Integrationseinheit aufweist bzw. aufweisen,
wobei die Integrationseinheit dazu ausgelegt ist, einen oder eine Vielzahl von Messwerten, insbesondere die Drehrate, über die Zeit, insbesondere numerisch, zu integrieren.

5. Kupplungssystem (1) gemäß einem der vorhergehenden Ansprüche,
wobei die erste Messanordnung (20) und/oder die zweite Messanordnung (120) einen Beschleunigungssensor aufweist,
wobei der Beschleunigungssensor insbesondere die Beschleunigung in drei senkrecht zu einander stehenden Raumrichtungen misst oder messen kann.

6. Kupplungssystem (1) gemäß einem der vorhergehenden Ansprüche,
wobei die erste Messanordnung (20) und/oder die zweite Messanordnung (120) einen Magnetometer aufweisen.

7. Kupplungssystem (1) gemäß einem der vorhergehenden Ansprüche,
wobei die erste Messanordnung (20) eine erste Kommunikationseinheit (22) aufweist und/oder mit einer ersten Kommunikationseinheit (22) verbunden ist,
wobei die erste Kommunikationseinheit (22) insbesondere derart ausgelegt ist, dass diese die Messwerte der ersten Messanordnung (20) drahtlos überträgt.

8. Kupplungssystem (1) gemäß einem der vorhergehenden Ansprüche,
wobei die zweite Messanordnung (120) eine zweite Kommunikationseinheit (122) aufweist und/oder mit einer zweiten Kommunikationseinheit (122) verbunden ist,
wobei die zweite Kommunikationseinheit (122) insbesondere derart ausgelegt ist, dass diese die Messwerte der zweiten Messanordnung (120) drahtlos überträgt.

9. Kupplungssystem (1) gemäß einem der vorhergehenden Ansprüche, wobei die erste Messanordnung (20) und/oder die zweite Messanordnung (120) eine inertiale Messeinheit ist und/oder eine inertiale Messeinheit umfasst.

10. Kupplungssystem (1) gemäß einem der vorhergehenden Ansprüche,
wobei die erste Messanordnung (20) eine GNSS-Einheit (8) umfasst und/oder
wobei die zweite Messanordnung (120) eine GNSS-Einheit (8) umfasst.

11. Kupplungssystem (1) gemäß einem der vorhergehenden Ansprüche,
wobei die erste Messanordnung (20) eine Vielzahl von GNSS-Einheiten (8), insbesondere zwei, aufweist und/oder
wobei die zweite Messanordnung (120) eine Vielzahl von GNSS-Einheiten (8), insbesondere zwei, aufweist.

## Claims

1. Coupling system (1), in particular fifth wheel coupling system, comprising
a first coupling arrangement (10), a second coupling arrangement (110),
a first measuring arrangement (20) and
a second measuring arrangement (120),
wherein the first coupling arrangement (10) is or can be fixed to a first vehicle (2), in particular a trailer,
wherein the first coupling arrangement (10) comprises a force transmission element (12), in particular a king pin, which extends in a king direction (R12), wherein the second coupling arrangement (110) is or can be fixed to a second vehicle (4), in particular a towing vehicle,
wherein the second coupling arrangement (110) comprises in particular a fifth wheel coupling,
wherein the first coupling arrangement (10) and the second coupling arrangement are designed in such a way that they can be rotated relative to one another about the king direction (R12) in an engaged state,
wherein the first measuring arrangement (20) is fixed relative to the first coupling arrangement (10),
wherein the second measuring arrangement (120) is fixed relative to the second coupling arrangement (110),
wherein the first measuring arrangement (20) is designed such that, in the engaged state, it measures or can measure directly without contact and/or indirectly without contact an angle of rotation of the first coupling arrangement (10) about the king direction (R12),
wherein the second measuring arrangement (120) is designed such that, in the engaged state, it measures or can measure directly without contact and/or indirectly without contact an angle of rotation of the second coupling arrangement (110) about the king direction (R12),
wherein the coupling system (1) comprises an evaluation unit (6),
wherein the evaluation unit (6) is designed to form a difference between the measured values of the first measuring arrangement (20) and the second measuring arrangement (120),
**characterized in that** the first measuring arrangement (20) is fixed relative to the first coupling arrangement (10) in such a way,
that at least one sensor of the first measuring arrangement (20) lies on the king direction (R12) in the engaged state and/or
that the second measuring arrangement (120) is fixed relative to the second coupling arrangement (110) in such a way,
that at least one sensor of the second measuring arrangement (120) lies on the king direction (R12) in the engaged state.

2. Coupling system (1) according to one of the preceding claims,
wherein the first measuring arrangement (20) and/or the second measuring arrangement (120) has or have a plurality of sensors,
wherein at least one of these sensors directly or indirectly measures or can measure an angle of rotation about the king direction.

3. Coupling system (1) according to one of the preceding claims,
wherein the first measuring arrangement (20) and/or the second measuring arrangement (120) comprise(s) a rotation rate sensor, in particular a gyrometer.

4. Coupling system (1) according to one of the preceding claims, in particular according to claim 3,
wherein the coupling system (1), in particular the evaluation unit (6) and/or the first measuring arrangement (20) and/or the second measuring arrangement (120), has or have an integration unit,
wherein the integration unit is designed to integrate one or a plurality of measured values, in particular the rotation rate, over time, in particular numerically.

5. Coupling system (1) according to one of the preceding claims,
wherein the first measuring arrangement (20) and/or the second measuring arrangement (120) comprise(s) an acceleration sensor,
wherein the acceleration sensor measures or can measure in particular the acceleration in three spatial directions perpendicular to each other.

6. Coupling system (1) according to one of the preceding claims,
wherein the first measuring arrangement (20) and/or the second measuring arrangement (120) comprise(s) a magnetometer.

7. Coupling system (1) according to one of the preceding claims,
wherein the first measuring arrangement (20) has a first communication unit (22) and/or is connected to a first communication unit (22),
wherein the first communication unit (22) is designed in particular in such a way that it transmits the measured values of the first measuring arrangement (20) wirelessly.

8. Coupling system (1) according to one of the preceding claims,
wherein the second measuring arrangement (120) has a second communication unit (122) and/or is connected to a second communication unit (122), wherein the second communication unit (122) is designed in particular such a way that it transmits the measured values of the second measuring arrangement (120) wirelessly.

9. Coupling system (1) according to one of the preceding claims,
wherein the first measuring arrangement (20) and/or the second measuring arrangement (120) is/are an inertial measuring unit and/or comprises an inertial measuring unit.

10. Coupling system (1) according to one of the preceding claims,
wherein the first measuring arrangement (20) comprises a GNSS unit (8) and/or
wherein the second measuring arrangement (120) comprises a GNSS unit (8).

11. Coupling system (1) according to one of the preceding claims,
wherein the first measuring arrangement (20) comprises a plurality of GNSS units (8), in particular two, and/or
wherein the second measuring arrangement (120) comprises a plurality of GNSS units (8), in particular two.

## Revendications

1. Système d'attelage (1), en particulier système de sellette d'attelage, comprenant un premier ensemble d'attelage (10), un deuxième ensemble d'attelage (110), un premier ensemble de mesure (20), et un deuxième ensemble de mesure (120),
dans lequel
le premier ensemble d'attelage (10) est fixé ou peut être fixé sur un premier véhicule (2), en particulier une remorque,
le premier ensemble d'attelage (10) comprend un élément de transmission de force (12), en particulier un pivot central, qui s'étend dans une direction de pivot (R12),
le deuxième ensemble d'attelage (110) est fixé ou peut être fixé sur un deuxième véhicule (4), en particulier un véhicule tracteur,
le deuxième ensemble d'attelage (110) comprend en particulier une sellette d'attelage,
le premier ensemble d'attelage (10) et le deuxième ensemble d'attelage sont conçus de manière à pouvoir tourner l'un par rapport à l'autre autour de la direction de pivot (R12), dans un état attelé,
le premier ensemble de mesure (20) est fixé par rapport au premier ensemble d'attelage (10),
le deuxième ensemble de mesure (120) est fixé par rapport au deuxième ensemble d'attelage (110),
le premier ensemble de mesure (20) est conçu de manière à mesurer ou à pouvoir mesurer, dans l'état attelé, directement sans contact et/ou indirectement sans contact, un angle de rotation du premier ensemble d'attelage (10) autour de la direction de pivot (R12),
le deuxième ensemble de mesure (120) est conçu de manière à mesurer ou à pouvoir mesurer, à l'état attelé, directement sans contact et/ou indirectement sans contact, un angle de rotation du deuxième ensemble d'attelage (110) autour de la direction de pivot (R12),
le système d'attelage (1) comprend une unité d'évaluation (6),
l'unité d'évaluation (6) est conçue pour former une différence à partir des valeurs de mesure du premier ensemble de mesure (20) et du deuxième ensemble de mesure (120),
**caractérisé en ce que**
le premier ensemble de mesure (20) est fixé par rapport au premier ensemble d'attelage (10) de telle sorte qu'au moins un capteur du premier ensemble de mesure (20) se trouve sur la direction de pivot (R12), dans l'état attelé, et/ou
**en ce que** le deuxième ensemble de mesure (120) est fixé par rapport au deuxième ensemble d'attelage (110) de telle sorte qu'au moins un capteur du deuxième ensemble de mesure (120) se trouve sur la direction de pivot (R12), dans l'état attelé.

2. Système d'attelage (1) selon la revendication précédente,
dans lequel le premier ensemble de mesure (20) et/ou le deuxième ensemble de mesure (120) comporte(nt) une pluralité de capteurs,
l'un au moins de ces capteurs mesure ou peut mesurer directement ou indirectement un angle de rotation autour de la direction de pivot.

3. Système d'attelage (1) selon l'une des revendications précédentes,
dans lequel le premier ensemble de mesure (20) et/ou le deuxième ensemble de mesure (120) comporte(nt) un capteur de vitesse de rotation, en particulier un gyromètre.

4. Système d'attelage (1) selon l'une des revendications précédentes, en particulier selon la revendication 3,
dans lequel le système d'attelage (1), en particulier l'unité d'évaluation (6) et/ou le premier ensemble de mesure (20) et/ou le deuxième ensemble de mesure (120), comporte(nt) une unité d'intégration,
l'unité d'intégration est conçue pour intégrer une ou plusieurs valeurs de mesure, en particulier la vitesse de rotation, en fonction du temps, en particulier par voie numérique.

5. Système d'attelage (1) selon l'une des revendications précédentes,
dans lequel le premier ensemble de mesure (20) et/ou le deuxième ensemble de mesure (120) comporte(nt) un capteur d'accélération,
le capteur d'accélération mesure ou peut mesurer en particulier l'accélération dans trois directions spatiales perpendiculaires entre elles.

6. Système d'attelage (1) selon l'une des revendications précédentes,
dans lequel le premier ensemble de mesure (20) et/ou le deuxième ensemble de mesure (120) comporte(nt) un magnétomètre.

7. Système d'attelage (1) selon l'une des revendications précédentes,
dans lequel le premier ensemble de mesure (20) comporte une première unité de communication (22) et/ou est relié à une première unité de communication (22),
la première unité de communication (22) est en particulier conçue de manière à transmettre sans fil les valeurs de mesure du premier ensemble de mesure (20).

8. Système d'attelage (1) selon l'une des revendications précédentes,
dans lequel le deuxième ensemble de mesure (120) comporte une deuxième unité de communication (122) et/ou est relié à une deuxième unité de communication (122),
la deuxième unité de communication (122) est en particulier conçue de manière à transmettre sans fil les valeurs de mesure du deuxième ensemble de mesure (120).

9. Système d'attelage (1) selon l'une des revendications précédentes,
dans lequel le premier ensemble de mesure (20) et/ou le deuxième ensemble de mesure (120) est une unité de mesure inertielle et/ou comprend une unité de mesure inertielle.

10. Système d'attelage (1) selon l'une des revendications précédentes,
dans lequel le premier ensemble de mesure (20) comprend une unité GNSS (8), et/ou
le deuxième ensemble de mesure (120) comprend une unité GNSS (8).

11. Système d'attelage (1) selon l'une des revendications précédentes,
dans lequel le premier ensemble de mesure (20) comprend une pluralité d'unités GNSS (8), en particulier deux, et/ou
le deuxième ensemble de mesure (120) comprend une pluralité d'unités GNSS (8), en particulier deux.
